# EUROPÄISCHE PATENTANMELDUNG

(11) **EP 4 000 805 A1**
(43) Veröffentlichungstag der Anmeldung: **25.05.2022**
(21) Anmeldenummer: 21194136.4
(22) Anmeldetag: 31.08.2021
(51) Int. Cl.: B24B 33/02, B24B 33/06, B24B 33/10, B24B 27/00, B24B 41/02, B24B 41/04, B24B 49/12, B24B 5/36

(54) **MOBILE VORRICHTUNG ZUR IN- SITU- BEARBEITUNG VON BOHRUNGSOBERFLÄCHEN UND VERFAHREN ZUR IN- SITU- BEARBEITUNG VON BOHRUNGSOBERFLÄCHEN AN BAUTEILEN**

(30) Priorität: 11.11.2020 DE 202020106460 U
(71) Anmelder: Ruhfus Systemhydraulik GmbH, 41460 Neuss (DE)
(72) Erfinder: KÜHN, Uwe, 41542 Dormagen (DE); WETSCHERKOWSKI, Alexander, 41462 Neuss (DE)
(74) Vertreter: Paul & Albrecht Patentanwälte PartG mbB

(57) **Zusammenfassung**

Mobile Vorrichtung (1) zur in- situ- Bearbeitung von Bohrungsoberflächen an Bauteilen, insbesondere bei Bohrungen an Korresponenten eines Zugs, bevorzugt an Zugachsen, einer Werkzeugeinheit (2), welche eine längliche Werkzeugwelle (20) aufweist, die um eine Werkzeugachse (X) rotierend antreibbar ist und an einem vorderen freien Ende (21) mit Aufnahmemitteln für ein Werkzeug versehen ist, und einer auf einem Boden verfahrbaren Trägereinheit (3), an welcher die Werkzeugeinheit (2) parallel zur Werkzeugachse (X) linear verfahrbar angebracht ist, um die Werkzeugeinheit (2) auf das zu bearbeitende Bauteil zu oder von diesem weg zu bewegen und ein an dem freien Ende (21) der Werkzeugwelle (20) angebrachtes Werkzeug in eine zu bearbeitende Bohrung einzubringen, wobei die Trägereinheit (3) Einstellmittel aufweist, um die Werkzeugachse (X) koaxial zur Bohrungsachse einer zu bearbeitenden Bohrung auszurichten.

## Beschreibung

Die vorliegende Erfindung betrifft eine mobile Vorrichtung zur in- situ- Bearbeitung von Bohrungsoberflächen an Bauteilen, insbesondere bei Bohrungen an Komponenten eines Zuges, bevorzugt an Zugachsen. Ferner betrifft die vorliegende Erfindung ein Verfahren zur in- situ- Bearbeitung von Bohrungsoberflächen an Bauteilen, insbesondere bei Bohrungen an Komponenten eines Zuges, bevorzugt an Zugachsen.

Achsen von Zügen, insbesondere von Hochgeschwindigkeitszügen, welche Geschwindigkeiten von bis zu 300 Kilometer pro Stunde erreichen, sind hohen dynamischen mechanischen Beanspruchungen unterworfen. Um ein Versagen von Zugachsen im Betrieb zu vermeiden, werden diese regelmäßigen Prüfintervallen unterzogen, so dass entstehende Defekte, beispielsweise Risse, frühzeitig erkannt werden können.

Ein gängiges Prüfverfahren ist dabei die Ultraschallprüfung, bei welcher Ultraschallimpulse in ein zu prüfendes Werkstück eingebracht werden und anhand entstehender Reflektionen dieser Impulse beurteilt werden kann, ob im Inneren des Werkstücks Defekte, beispielsweise Materialfehler, vorliegen. Da Achsen von Zügen zumeist hohl ausgebildet sind und somit über eine Durchgangsbohrung verfügen, erfolgt die Ultraschallprüfung zumindest teilweise von innen. Um eine einwandfreie Einkopplung der Ultraschallimpulse in das Werkstück zu gewährleisten, wird dabei ein Prüfkopf, welcher die Impulse emittiert, an der Werkstückoberfläche positioniert und entlang dieser bewegt. Obwohl meistens zwischen dem Prüfkopf und der Werkstückoberfläche ein gelartiges Kopplungsmittel vorgesehen ist, kann bei einer solchen Ultraschallprüfung der Prüfkopf lokal in direkten Kontakt mit der Werkstückoberfläche kommen und Beschädigungen in dieser hervorrufen. Dabei kann es sich beispielsweise um leichte Kratzer handeln, die jedoch einen Ausgangspunkt für im Betrieb entstehende Risse bilden können. Außerdem können an der Oberfläche alterungs- oder gebrauchsbedingte Verschmutzungen oder Reste von Konosionsschutzmitteln vorliegen.

Aus diesem Grund ist es nach jeder Ultraschallprüfung erforderlich, die Oberfläche der Bohrung zu glätten. Dazu wird die Zugachse vom Rest des Zuges demontiert und in einer Vorrichtung zum Honen nachbearbeitet. Beim Honen handelt es sich um ein zerspanendes Feinbearbeitungsverfahren, bei welchem mit geometrisch unbestimmter Schneide eine Oberfläche geschliffen wird. Sollen zylindrische Innenflächen (zum Beispiel bei Bohrungen) gehont werden, wird dazu zumeist eine sogenannte Honahle verwendet, welche selbstzentrierend arbeitet.

Auch wenn sich diese Vorgehensweise nach der Ultraschallprüfung von Zugachsen grundsätzlich bewährt hat, so wird zu Teilen als nachteilig angesehen, dass insbesondere zum Nachbearbeiten der Werkstückoberfläche eine Demontage der Zugachse von dem Zug erforderlich ist. Dies ist mit einem hohen Arbeitsaufwand verbunden.

Aufgabe der vorliegenden Erfindung ist es daher, eine Vorrichtung und ein Verfahren zur Bearbeitung von Bohrungsoberflächen bereitzustellen, welche die zuvor genannten Nachteile vermeidet.

Diese Aufgabe wird gelöst durch eine Vorrichtung der eingangs genannten Art mit einer Werkzeugeinheit, welche eine längliche Werkzeugwelle aufweist, die um eine Werkzeugachse rotierend antreibbar ist und an einem vorderen freien Ende mit Aufnahmemitteln für ein Werkzeug versehen ist, und einer auf einem Boden verfahrbaren Trägereinheit, an welcher die Werkzeugeinheit parallel zur Werkzeugachse linear verfahrbar angebracht ist, um die Werkzeugeinheit auf das zu bearbeitende Bauteil zu oder von diesem wegzubewegen und ein an dem freien Ende der Werkzeugwelle angebrachtes Werkzeug in eine zu bearbeitende Bohrung einzubringen, wobei die Trägereinheit Einstellmittel aufweist, um die Werkzeugachse koaxial zur Bohrungsachse einer zu bearbeitenden Bohrung auszurichten.

Ferner ist die der Erfindung zu Grunde liegende Aufgabe bei einer Verfahren der eingangs genannten Art gelöst, welches die folgenden Schritte umfasst:
- Bereitstellen des zu bearbeitenden Bauteils, insbesondere eines Zugs bevorzugt mit mehreren Zugachsen;
- Bereitstellen einer mobilen Vorrichtung gemäß der vorliegenden Erfindung;
- Einstellen der Vorrichtung derart, dass die Werkzeugachse koaxial zur Bohrungsachse der zu bearbeitenden Bohrung ausgerichtet ist;
- Bearbeiten, insbesondere Honen der Bohrungsoberfläche durch Einbringen des freien Endes der Werkzeugwelle, welches mit einem entsprechenden Werkzeug, insbesondere einem Honwerkzeug, versehen ist, in die zu bearbeitende Bohrung.

Der Erfindung liegt die grundsätzliche Überlegung zu Grunde, eine Vorrichtung zur Bearbeitung von Bohrungsoberflächen zu verwenden, welche eine in- situ- Bearbeitung des Werkstücks, insbesondere der Zugachse, gestattet. Mit anderen Worten soll die Vorrichtung mobil ausgestaltet sein, so dass sie an der entsprechenden Zugachse positioniert und koaxial zur zu bearbeitenden Bohrung ausgerichtet werden kann. Ein aufwendiger Ausbau der Zugachsen ist somit nicht mehr erforderlich.

Die erfindungsgemäße Vorrichtung kann derart ausgestaltet sein, dass die Trägereinheit einen mobilen, verfahrbaren Hubwagen aufweist, welcher ein bodennahes Grundgestell mit einer insbesondere rechteckigen Grundform und einer relativ zu dieser höhenverstellbaren Tragplatte, welche die Werkzeugeinheit trägt, umfasst. Dementsprechend ist das erfindungsgemäße Verfahren bevorzugt dadurch gekennzeichnet, dass das Einstellen der Vorrichtung eine Höheneinstellung der Werkzeugeinheit relativ zum Boden umfasst, um die Werkzeugeinheit derart auszurichten, dass die Werkzeugachse auf der Höhe der Bohrungsachse der zu bearbeitenden Bohrung verläuft. Ein Hubwagen, stellt dabei eine einfache und robuste Möglichkeit dar, eine solche Höhenanpassung vorzunehmen. Gleichzeitig ist sichergestellt, dass die Tragplatte während der Höhenverstellung parallel zum Boden bewegt wird und somit die Werkzeugachse nicht geneigt beziehungsweise verkippt werden kann.

Bevorzugt ist der Hubwagen als Scherenhubwagen ausgebildet. Ein Scherenhubwagen ist dadurch gekennzeichnet, dass er zwei Paare von scherenförmig miteinander verbundenen Stützstreben aufweist, die an ihren oberen Endbereichen schwenkbar und verschiebbar mit der Tragplatte verbunden sind und in ihren unteren Bereichen schwenkbar und verschiebbar mit dem Grundgestell verbunden sind. Die Höhenverstellung der Tragplatte zum Grundgestell erfolgt dadurch, dass die beiden Stützstreben jedes Paares, welche in ihrem mittleren Abschnitt schwenkbar miteinander verbunden sind, zueinander verschwenkt werden. Das Verschwenken der beiden Stutzstreben zueinander kann mittels einer geeigneten Antriebseinrichtung erfolgen. Diese kann bevorzugt einen Hydraulikzylinder umfassen, welcher die beiden Stützstreben miteinander koppelt, wodurch das Heben von hohen Lasten bei gleichzeitig geringem Platzbedarf ermöglicht wird.

Die Einstellmittel der erfindungsgemäßen Vorrichtung können an der Trägereinheit vorgesehene Verfahrmittel umfassen, um die Trägereinheit auf einem Boden insbesondere manuell zu bewegen und relativ zum zu bearbeitenden Bauteil zu positionieren. Konkret können die Verfahrmittel vier insbesondere in den Eckbereichen der Trägereinrichtung angeordnete Rollenanordnungen umfassen. Dementsprechend kann beim erfindungsgemäßen Verfahren vorgesehen sein, dass das Einstellen der Vorrichtung ein insbesondere manuelles Bewegen der Vorrichtung auf einem Boden umfasst, um die Werkzeugeinheit vor dem zu bearbeitenden Bauteil zu positionieren. Rollenanordnungen, die jeweils eine oder zwei parallel zueinander angeordnete Rollen umfassen können, ermöglichen dabei ein reibungsarmes Verschieben der Vorrichtung, sodass auch bei einer massiven Ausführung eine manuelle Bewegung möglich ist.

Um die Vorrichtung in geeigneter Weise vor dem zu bearbeitenden Bauteil zu positionieren, können die Rollenanordnungen schwenkbar an der Trägereinheit um eine senkrecht zu Boden verlaufende Drehachse gelagert sein. Auf diese Weise kann die Vorrichtung besonders einfach und platzsparend gehandhabt und verschoben beziehungsweise auf dem Boden gedreht werden.

Um die Trägereinheit am Boden abzustützen und ein unbeabsichtigtes Bewegen während der Bearbeitung eines Bauteils zu vermeiden, können entsprechende Stützmittel vorgesehen sein. Bevorzugt umfassen die Stützmittel insgesamt vier Stützen, welche an der Trägereinheit höhenverstellbar zu dieser derart angebracht sind, dass diese die Trägereinheit während der Bearbeitung eines Bauteils gegen den Boden abstützen und so gegen ein unbeabsichtigtes Bewegen sichern können. Ist die Vorrichtung vor der zu bearbeitenden Bohrung des Bauteils positioniert, so können die Stützen nach unten bewegt werden, bis diese den Boden berühren und möglicherweise geringfügig die vorhandenen Verfahrmittel, beispielsweise die Rollenanordnungen, vom Boden abheben. Auf diese Weise wird die Vorrichtung durch ihre eigene Gewichtskraft gegen eine unbeabsichtigte Bewegung während der Bearbeitung eines Bauteils gesichert.

In weiterer Ausgestaltung dieser Ausführungsform können die Stützen derart an der Trägereinheit angebracht sein, dass sie die Ecken eines Trapezes, insbesondere eines gleichschenkligen Trapezes und bevorzugt eines Rechtecks bilden. Mit anderen Worten sind die vier Stützen in Form eines Vierecks angebracht, wobei bevorzugt zwei Stützen in einem vorderen, dem zu bearbeitenden Bauteil zugewandten Bereich der Trägereinheit angebracht sind und zwei Stützen bevorzugt in einem hinteren, vom zu bearbeitenden Bauteil abgewandten Bereich der Trägereinheit angeordnet sind.

Ferner können die Stützen unabhängig voneinander zur Trägereinheit höhenverstellbar sein, so dass durch Einstellen der Stützen die Werkzeugwelle mit ihrem vorderen freien Ende nach unten und oben gekippt werden kann, um die Werkzeugachse koaxial zur Bohrungsachse einer zu bearbeitenden Bohrung auszurichten. Dementsprechend kann bei dem erfindungsgemäßen Verfahren das Einstellen der Vorrichtung eine Neigungseinstellung der Werkzeugachse relativ zur Bohrungsachse durch Verkippen des vorderen freien Endes der Werkzeugwelle nach oben oder nach unten umfassen, um die Werkzeugachse koaxial zur Bohrungsachse der zu bearbeitenden Bohrung auszurichten. Mit anderen Worten kann die Neigung der Werkzeugachse durch Höhenverstellung der Stützen angepasst werden. Beispielsweise wird das vordere freie Ende der Werkzeugwelle nach oben gekippt, wenn die vorderen Stützen nach unten beziehungsweise die hinteren Stützen relativ zur Trägereinheit nach oben bewegt werden. Umgekehrt wird die Werkzeugwelle an ihrem vorderen freien Ende nach unten gekippt, wenn die vorderen Stützen relativ zur Trägereinheit nach oben beziehungsweise die hinteren Stützen nach unten bewegt werden.

Zur Höhenverstellung der Stützen, können diese mit einem Außengewinde versehen sein, welches in eine Bohrung mit einem korrespondieren Innengewinde der Trägereinheit eingeschraubt ist, sodass die Stützen um ihre Längsachse gedreht werden können. Eine solche Gewindeanordnung zwischen der jeweiligen Stütze und der Trägereinheit ermöglicht eine einfache manuelle Höhenverstellung.

Um die Werkzeugeinheit relativ zur Trägereinheit parallel zur Werkzeugachse zu führen, kann eine Linearführung vorgesehen sein. In an sich bekannter Weise kann diese Linearführung ein Führungsprofil, welches auf der Trägereinheit, insbesondere auf einer Tragplatte der Trägereinheit, aufliegt und an dieser befestigt ist, und einen die Werkzeugeinheit tragenden Schlitten umfassen, welcher am Führungsprofil gehalten ist und relativ zu diesem verfahrbar ist. Der Schlitten kann beispielsweise das Führungsprofil teilweise umgreifen. Dazu kann in dem Führungsprofil eine sich in dessen Längstrichtung erstreckende Führungsnut oder ein entsprechender Führungsvorsprung ausgebildet sein, welcher in eine korrespondierende Kontur am Schlitten eingreift. Um die Reibungswiderstände möglichst gering zu halten, kann die Führung mittels einer Kugelumlauf-Führung realisiert werden. Dadurch können hohe Lasten getragen werden. Um die Beweglichkeit des Schlittens zu begrenzen, können entsprechende Begrenzungsmittel vorgesehen sein. Dabei kann es sich um Endplatten handeln, welche am Ende des Führungsprofils angebracht sind. Alternativ oder ergänzend können Endlagenschalter, welche beispielsweise als induktive Näherungsschalter ausgebildet sein können, am Führungsprofil angebracht sein. Diese können die Position des Schlittens erkennen, sodass eine weitere Bewegung über diese Endlagenschalter hinaus durch eine entsprechende Steuerung verhindert wird.

Gemäß einer bevorzugten Ausgestaltung sind Vorschubmittel vorgesehen, um den Schlitten relativ zum Führungsprofil zu bewegen. Diese können einen Antriebsmotor, insbesondere einen Schrittmotor umfassen. Derartige Vorschubmittel sind erforderlich, wenn das Werkzeug, welches an dem vorderen freien Ende der Werkzeugwelle angebracht ist, in eine zu bearbeitende Bohrung eingebracht werden soll. Durch einen Schrittmotor kann dabei eine kontinuierliche Vorschubgeschwindigkeit des Werkzeugs während der Bearbeitung der Bohrungsoberfläche eingestellt werden.

Die Vorschubmittel können ferner eine drehfest mit dem Antriebsmotor gekoppelte Gewindespindel und eine korrespondierende, am Schlitten befestigte Spindelmutter umfassen, um eine Drehbewegung der Gewindespindel in eine translatorische Bewegung des Schlittens umzusetzen. Die Gewindespindel kann dabei direkt mit der Spindelmutter in Kontakt kommen. Denkbar ist auch, dass insbesondere zur Reduzierung der Reibungskräfte ein Kugelumlaufspindelgetriebe eingesetzt wird.

Um die Werkzeugwelle in Rotation zu versetzen, kann die Werkzeugeinheit Antriebsmittel aufweisen. Bevorzugt umfassen diese einen Elektromotor, insbesondere einen drehzahlgesteuerten Elektromotor, bevorzugt einen Schrittmotor oder einen Servomotor. Auf diese Weise kann die Werkzeugwelle mit einer definierten und gesteuerten Drehzahl beaufschlagt werden, wenn das Werkzeug, welches sich an ihrem vorderen freien Ende befindet, in eine zu bearbeitende Bohrung eingebracht wird.

Zum Schutz des Elektromotors vor Verunreinigung kann die Werkzeugeinheit ein Gehäuse umfassen, welches den Elektromotor zumindest teilweise umgibt. Dieser Ausgestaltung liegt die Überlegung zu Grunde, dass in Werkstätten, insbesondere im Umfeld der Wartung von Zügen, Verunreinigungen auftreten können, welche den Elektromotor beschädigen könnten.

In weiterer Ausgestaltung der erfindungsgemäßen Vorrichtung kann am freien Ende der Werkzeugwelle ein Honwerkzeug zur Innenbearbeitung von Bohrungen angebracht sein. Dabei kann es sich beispielsweise und eine Honahle handeln, welche mehrere Schneiden umfasst. Diese Schneiden, beispielsweise drei oder vier Schneiden, sind dabei über den Umfang um die Werkzeugachse gleichmäßig angeordnet und derart miteinander gekoppelt, dass auf sie eine geringe, radial von der Werkzeugachse nach außen wirkende Kraft aufgebracht wird, so dass sie mit einer definierten Kraft gegen die Bohrungsoberfläche gedrückt werden. Da es sich bei der Honahle um ein selbst zentrierendes Werkzeug handelt, kann diese über ein Kardangelenk mit der Werkzeugwelle verbunden sein. Dadurch wird eine Flexibilität gewährleistet und somit ein Verkanten oder lokal zu hohe Schnittkräfte, welche auf das zu bearbeitende Bauteil wirken, vermieden.

Bevorzugt ist die Werkzeugwelle mehrteilig ausgebildet und umfasst einen werkzeugseitigen vorderen Abschnitt und einen antriebsseitigen hinteren Abschnitt, wobei die beiden Abschnitte durch eine flexible Kupplung miteinander verbunden sind, um Abweichungen der Koaxialität der Werkzeugachse zur Bohrungsachse ausgleichen zu können. Vor dem Hintergrund, dass die erfindungsgemäße Vorrichtung zum Honen eingesetzt wird und es sich bei einem Honwerkzeug um ein selbst-zentrierendes Werkzeug handelt, werden durch eine derartige Flexibilität in der Werkzeugwelle ein Verkanten oder lokal hohe Schnittkräfte vermieden. Die Kupplung kann dabei derart ausgestaltet sein, dass sie ein Verkippen der beiden Abschnitte der Werkzeugwelle zueinander toleriert und/oder geeignet ist, Drehzahlschwankungen zumindest teilweise zu kompensieren und zu dämpfen.

Ferner kann die Vorrichtung eine Lasermesseinrichtung umfassen, welche ausgebildet und geeignet ist, die Ausrichtung der Werkzeugachse relativ zu der Bohrungsachse einer zu bearbeitenden Bohrung zu vermessen. Demzufolge kann bei dem erfindungsgemäßen Verfahren vorgesehen sein, dass während des Einstellens der Vorrichtung ein Vermessen der Ausrichtung der Werkzeugachse relativ zu der Bohrungsachse der zu bearbeitenden Bohrung insbesondere mittels einer Lasermesseinrichtung stattfindet. Dieser Ausgestaltung liegt die grundsätzliche Überlegung zu Grunde, dass durch eine Lasermesseinreichtung ein weitaus genaueres koaxiales Ausrichten der Werkzeugachse zur Bohrungsachse ermöglicht wird als bei einer rein manuellen, auf die Sehkraft des menschlichen Auges beschränkten Ausrichtung.

Hinsichtlich weiterer vorteilhafter Ausgestaltung der Erfindung wird auf die Unteransprüche, sowie auf die nachfolgende Beschreibung eines Ausführungsbeispiels und der Bezugnahme auf die beiliegende Zeichnung verwiesen. In der Zeichnung zeigen:
- Figur 1: eine Vorrichtung gemäß der vorliegenden Erfindung in einer perspektivischen Ansicht;
- Figur 2: die Vorrichtung aus Figur 1 in einer Vorderansicht;
- Figur 3: die Vorrichtung aus Figur 1 in einer Seitenansicht;
- Figur 4: die Vorrichtung aus Figur 1 in einer Draufsicht;
- Figur 5: das vordere freie Ende der Werkzeugwelle der Vorrichtung aus Figur 1 in einer detaillierten perspektivischen Ansicht; und
- Figur 6: das hintere Ende der Werkzeugwelle in einer detaillierten Draufsicht.

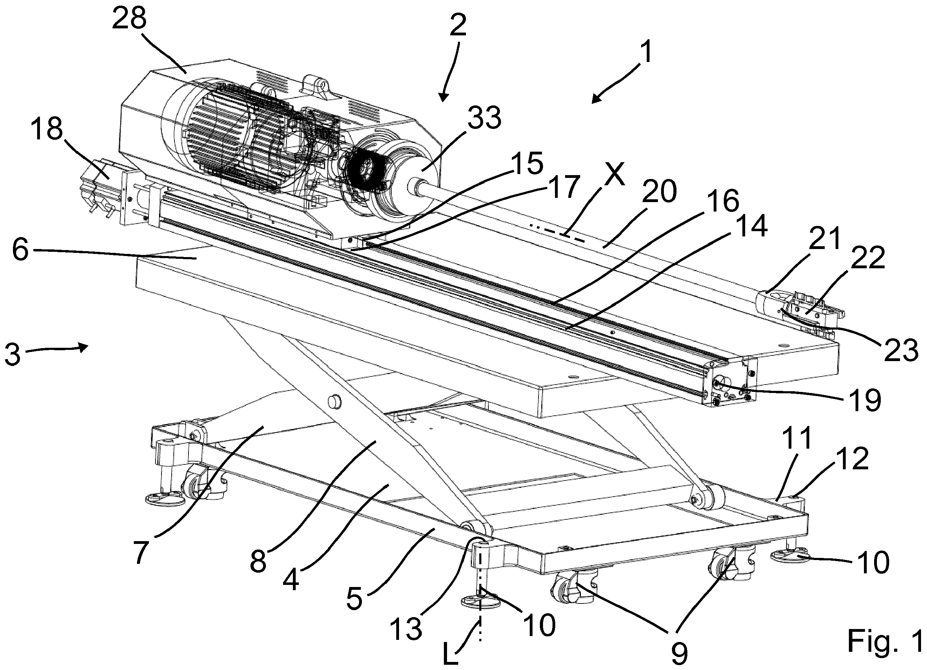

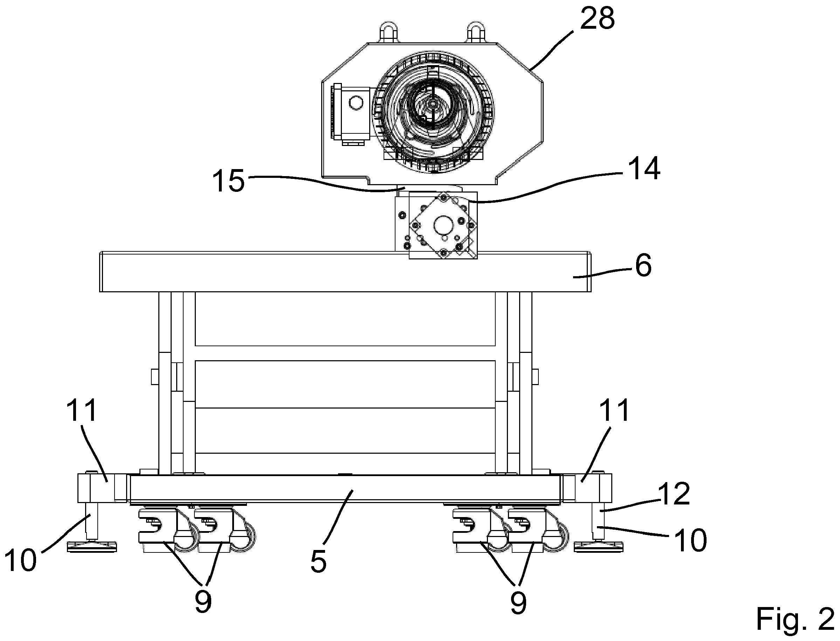

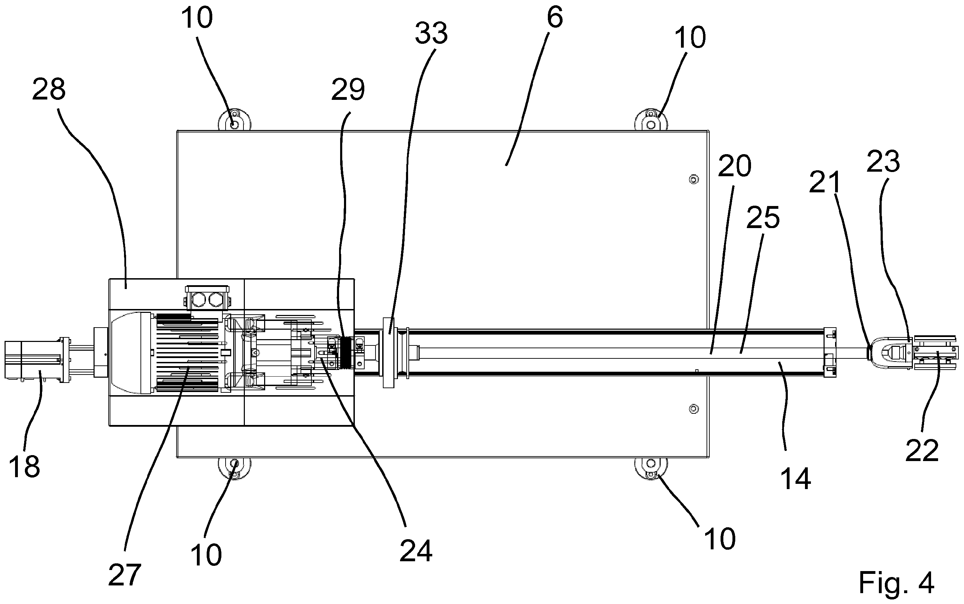

Die Figuren 1 bis 4 zeigen eine mobile Vorrichtung 1 zum in- situ- Honen von Bohrungsoberflächen bei zentralen Bohrungen von Zugachsen gemäß der vorliegenden Erfindung. Die Vorrichtung 1 umfasst eine Werkzeugeinheit 2 und eine auf einem Boden verfahrbare Trägereinheit 3. An dieser ist die Werkzeugeinheit 2 linear verfahrbar angebracht.

Die Trägereinheit 3 weist einen mobilen verfahrbaren Scherenhubwagen 4 auf, welcher ein bodennahes Grundgestell 5 mit einer rechteckigen Grundform und eine relativ zu diesem höhenverstellbare Tragplatte 6, welche die Werkzeugeinheit 2 trägt, umfasst. Zur Höhenverstellung der Tragplatte 6 relativ zum Grundgestell 5 sind zwei Paare scherenförmig miteinander verbundener Stützstreben 7, 8 vorgesehen. Konkret sind die beiden Paare seitlich an einander gegenüberliegenden Kanten des Grundgestells 5 beziehungsweise der Tragplatte 6 angeordnet. Jedes Paar weist eine Stützstrebe 7 auf, welche in ihrem unteren Endbereich schwenkbar mit dem Grundgestell 5 verbunden ist und in ihrem oberen Endbereich schwenkbar und verschiebbar mit der Tragplatte verbunden ist, wohingegen die andere Stützstrebe 8 des Paares mit ihrem oberen Endbereich schwenkbar mit der Tragplatte 6 verbunden ist und mit ihrem unteren Endbereich schwenkbar und verschiebbar mit dem Grundgestell 5 verbunden ist. Die Höhenverstellung der Tragplatte 6 zum Grundgestell 5 kann dadurch erfolgen, dass die beiden Stützstreben 7, 8 jedes Paares zueinander verschwenkt werden. Dadurch ist sichergestellt, dass sich die Tragplatte 6 stets parallel zum Grundgestell 5 erstreckt und ein Verkippen relativ zueinander nicht stattfindet.

Um die Trägereinheit 3 auf einem Boden insbesondere manuell zu bewegen und relativ zum zu bearbeitenden Bauteil zu positionieren, sind an der Trägereinheit 3 entsprechende Verfahrmittel vorgesehen. Vorliegend umfassen diese vier Rollenanordnungen 9, welche in der Nähe der Eckbereiche des Grundgestells 5 an diesem angebracht sind und um eine senkrecht zum Boden verlaufende Drehachse schwenkbar am Grundgestell 5 gelagert sind. Die Rollenanordnungen 9 bilden vorliegend die Grundform eines gleichschenkligen Trapezes, wobei der Abstand zwischen den beiden vorderen Rollenanordnungen geringer ist als bei den beiden hinteren Rollenanordnungen 9.

Ferner sind Stützmittel vorgesehen, um die Trägereinheit 3 am Boden abzustützen und ein unbeabsichtigtes Bewegen während der Bearbeitung eines Bauteils zu vermeiden. Die Stützmittel umfassen insgesamt 4 Stützen 10, welche höhenverstellbar an Vorsprüngen 11 des Grundgestells 5 der Trägereinheit 3 derart angebracht sind, dass sie die Ecken eines Rechtecks bilden. Konkret befinden sich zwei Stützen 10 in einem vorderen Bereich des Grundgestells 5, wohingegen zwei Stützen 10 in einem hinteren Endbereich des Grundgestells 5 angeordnet sind.

Jede Stütze 10 ist mit einem Außengewinde 12 versehen, welches in eine Bohrung 13 an den Vorsprüngen 11 mit einem korrespondierenden Innengewinde eingeschraubt ist, so dass die Stützen 10 um ihre Längsachse L gedreht werden können, um eine Höhenverstellung relativ zum Grundgestell 5 vorzunehmen.

Um die Werkzeugeinheit 2 relativ zur Trägereinheit 3 linear verfahren zu können, ist eine Linearführung vorgesehen. Diese umfasst ein Führungsprofil 14, welches auf der Tragplatte 6 aufliegt und an dieser befestigt ist. An diesem ist ein Schlitten 15 gehalten und relativ zu diesem verfahrbar, welcher die Werkzeugeinheit 2 trägt. Dazu weist das Führungsprofil 14 einen entsprechenden Führungsvorsprung 16 auf, welcher in eine korrespondierende Führungsnut 17 des Schlittens 15 eingreift. Ferner sind am Führungsprofil 14 zwei in den Figuren nicht dargestellte Endlagenschalter angebracht, um die Beweglichkeit des Schlittens 15 relativ zum Führungsprofil 14 zu begrenzen.

Außerdem sind Vorschubmittel vorgesehen, um den Schlitten 15 relativ zum Führungsprofil 14 zu bewegen. Diese umfassen vorliegend einen Schrittmotor 18, welcher am rückseitigen Ende des Führungsprofils 14 angebracht ist. Ferner umfassen die Vorschubmittel eine drehfest mit dem Schrittmotor 18 gekoppelte Gewindespindel 19, welche vorliegend innerhalb des Führungsprofils 14 in einem durchgängigen Hohlraum angeordnet ist, und eine am Schlitten 15 befestigte - nicht sichtbare - Spindelmutter, sodass eine Drehbewegung der Gewindespindel 19 in eine translatorische Bewegung des Schlittens 15 umgesetzt wird.

Die von dem Schlitten 15 getragene Werkzeugeinheit 2 besitzt eine längliche Werkzeugwelle 20, welche um eine Werkzeugachse X rotierend antreibbar ist und an deren vorderen freien Ende 21 ein Honwerkzeug 22 über ein Kardengelenk 23 angebracht ist.

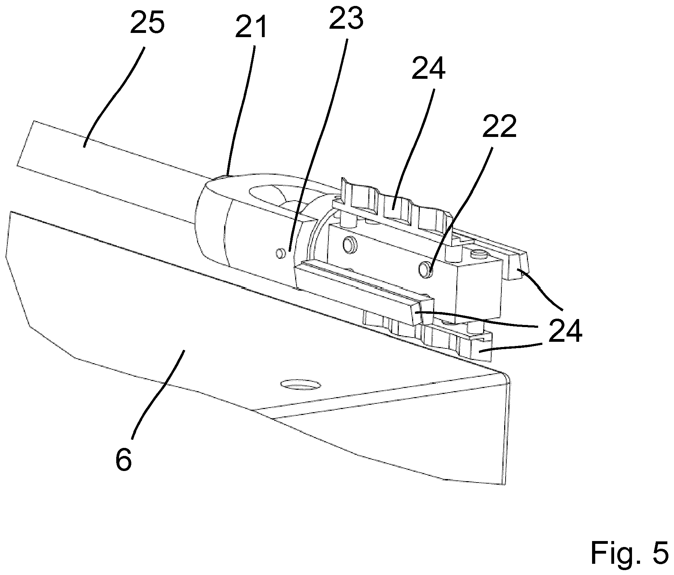

In Figur 5 ist das Honwerkzeug 22, das Kardengelenk 23 und das vordere Ende 21 der Werkzeugwelle 20 im Detail dargestellt. Das Honwerkzeug 22 enthält dabei vier umlaufende Schneiden 24, mittels derer eine Bohrung von innen bearbeitet werden kann. Durch die Anordnung der Schneiden 24 ist das Honwerkzeug 22 selbstzentrierend.

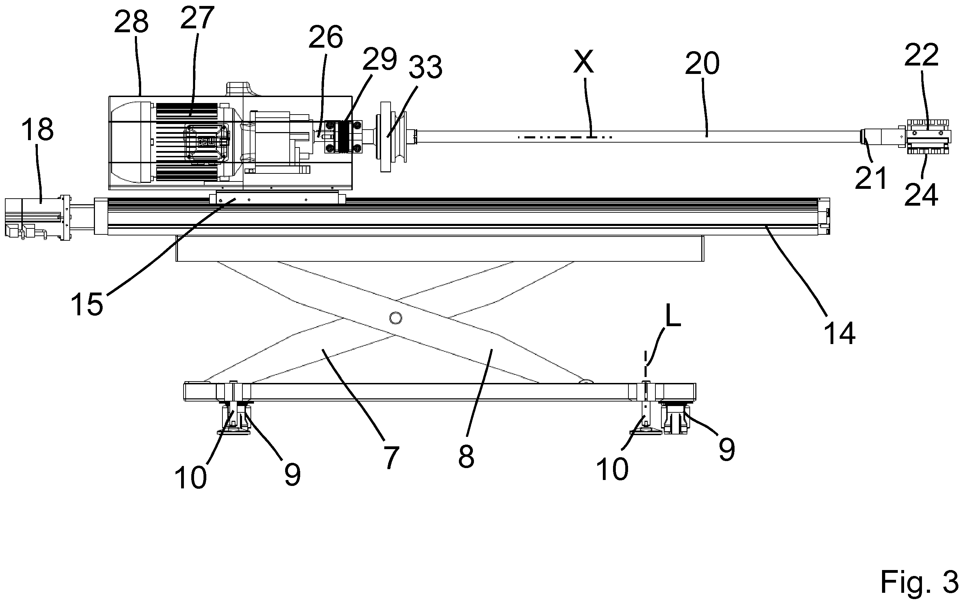

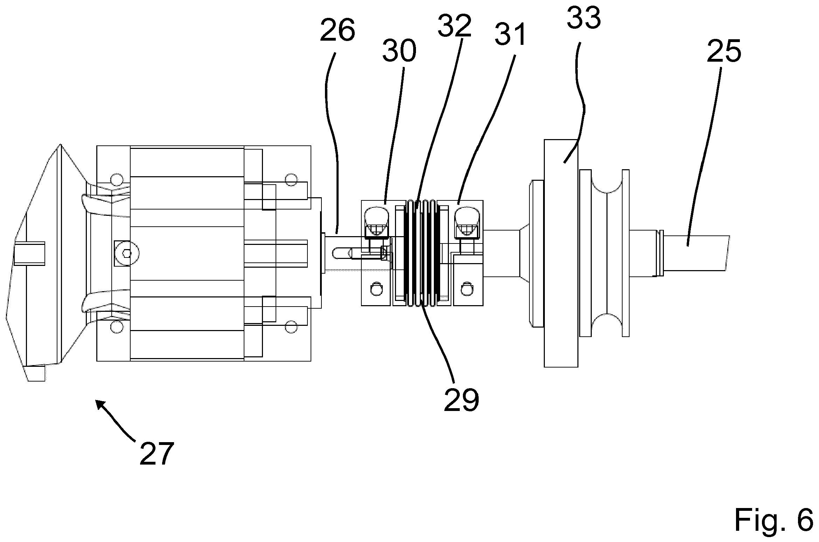

Wie insbesondere in Figur 3 erkennbar ist die Werkzeugwelle 20 zweiteilig ausgebildet und umfasst einen werkzeugseitigen vorderen Abschnitt 25 und einen antriebsseitigen hinteren Abschnitt 26, welcher von der Abtriebswelle eines Elektromotors 27, welcher in einem Gehäuse 28 untergebracht ist, gebildet wird. Der werkzeugseitige vordere Abschnitt 25 und der antriebsseitige hintere Abschnitt 26 der Werkzeugwelle 20 sind durch eine flexible Kupplung 29 miteinander verbunden. Diese ist derart ausgestaltet, dass sie ein Verkippen der beiden Abschnitte 25, 26 der Werkzeugwelle 20 zueinander toleriert und gleichzeitig geeignet ist, Drehzahlschwankungen zumindest teilweise zu kompensieren beziehungsweise zu dämpfen. Wie in Figur 6 erkennbar ist, besitzt die flexible Kupplung 29 dazu einen antriebsseitigen Bereich 30, welcher mit dem antriebsseitigen hinteren Abschnitt 26 der Werkzeugwelle drehfest verbunden ist, und einen abtriebsseitigen Bereich 31, welcher mit dem abtriebsseitigen Abschnitt 25 der Werkzeugwelle 20 drehfest verbunden ist. Zwischen dem antriebsseitigen Bereich 30 und dem abtriebsseitigen Bereich 31 der flexiblen Kupplung 29 ist ein Metallbalg 32 angeordnet, welcher die beiden Bereiche 30, 31 miteinander verbindet, so dass durch Verformen des Metallbalgs 32 ein Verkippen der beiden Bereiche 30, 31 und damit der Abschnitte 25, 26 der Werkzeugwelle 20 zueinander ermöglicht wird.

Im hinteren Endbereich des vorderen Abschnitts 25 der Werkzeugwelle 20 ist ein Einstellteller 33 angeordnet. Dieser ist derart mit dem Honwerkzeug 22 gekoppelt, dass ein Drehen des Einstelltellers 33 um die Werkzeugachse X zu einer radialen Verschiebung der einzelnen Schneiden 24 zur Werkzeugachse X führt. Das bedeutet, dass durch manuelles Drehen des Einstelltellers 33 das Honwerkzeug 22 an verschiedene Bohrungsdurchmesser angepasst werden kann beziehungsweise bei an den Schneiden 24 auftretendem Verschleiß eine Nachjustierung vorgenommen werden kann.

Soll die Oberfläche der Bohrung beispielsweise einer Zugachse mit der mobilen Vorrichtung 1 bearbeitet werden, so wird zunächst die mobile Vorrichtung 1 durch Verfahren mittels der Rollenanordnungen 9 derart vor der Zugachse positioniert, dass - von oben betrachtet - die Werkzeugachse X und die Bohrungsachse der zu bearbeitenden Bohrung übereinanderliegen. Anschließend können die Stützen 10 durch Verdrehen um ihre Längsachse L nach unten bewegt werden, sodass sie in Kontakt mit dem Boden kommen und die Trägereinheit 3 somit gegen den Boden abstützen. Dadurch wird verhindert, dass sich die Vorrichtung 1 während der Bearbeitung unbeabsichtigt bewegen kann.

Anschließend kann eine Höhenverstellung der Tragplatte 6 relativ zum Grundgestell 5 derart vorgenommen werden, dass die Werkzeugachse X auf der gleichen Höhe wie die Bohrungsachse der zu bearbeitenden Bohrung liegt. Ferner können die Stützen 10, da sie einzeln verstellt werden können, derart angepasst werden, dass die Werkzeugwelle 20 mit ihrem vorderen freien Ende 21 nach oben beziehungsweise nach unten verkippt wird, um die Werkzeugachse X koaxial zur Bohrungsachse auszurichten. Konkret können dafür beispielsweise die beiden vorderen Stützen 10 relativ zum Grundgestell 5 nach unten bewegt werden, um das vordere freie Ende 21 der Werkzeugwelle 20 nach oben zu kippen. Alternativ können dazu auch die hinteren Stützen 19 nach oben bewegt werden. Umgekehrt können die vorderen Stützen 10 nach oben beziehungsweise die hinteren Stützen 10 nach unten bewegt werden, um das vordere freie Ende 21 der Werkzeugwelle 20 nach unten zu kippen. Auf diese Weise können die Werkzeugachse X und die Bohrungsachse der zu bearbeitenden Bohrung - von der Seite betrachtet - übereinander angeordnet werden. Die Anpassung der Höhe durch Höhenverstellung des Scherenhubwagens 4 und das Kippen des vorderen freien Endes 21 der Werkzeugwelle 20 durch Anpassung der Stützen 10 kann bei Bedarf mehrfach durchgeführt werden, bis die Werkzeugachse X und die Bohrungsachse der zu bearbeitenden Bohrung koaxial zueinander ausgerichtet sind.

Sobald eine hinreichende Koaxialität zwischen den beiden Achsen erreicht ist, kann die Werkzeugwelle 20 und das an dem vorderen freien Ende 21 angebrachte Honwerkzeug 22 durch Starten des Elektromotors 27 in Rotation versetzt werden. Durch die Antriebsmittel der Linearführung, vorliegend den Schrittmotor 18 in Verbindung mit der Gewindespindel 19 und der (nicht sichtbaren) Spindelmutter, welche mit dem Schlitten 15 verbunden ist, kann die Werkzeugeinheit auf die Zugachse zu bewegt werden, so dass das Honwerkzeug 22 in die zu bearbeitende Bohrung eingebracht wird. Durch weiteres Bewegen des Honwerkzeugs 22 in die Bohrung hinein kann die Bohrung über ihre gesamte Länge bearbeitet werden. Eventuell auftretende Abweichungen in der Koaxialität zwischen Werkzeugwelle 20 und Bohrung können dabei durch die flexible Kupplung 29 und das Kardangelenk 23 am Honwerkzeug 22 ausgeglichen werden. Dadurch wird eine gleichmäßige Bearbeitung der Bohrungsoberfläche über ihre gesamte Länge ermöglicht. Nach Beendigung der Bearbeitung kann das Honwerkzeug 22 durch Bewegung des Schlittens 15 und der daran befestigten Werkzeugeinheit 2 nach hinten aus der Bohrung herausgezogen werden. Die Vorrichtung 1 gemäß der vorliegenden Erfindung ermöglicht es somit, Zugachsen von innen nach einer Ultraschallprüfung zu bearbeiten, ohne dass die Zugachsen vom Zug demontiert werden müssen, was eine erhebliche Verkürzung der Arbeitszeit ermöglicht.

### Bezugszeichenliste

- 1: Vorrichtung
- 2: Werkzeugeinheit
- 3: Trägereinheit
- 4: Scherenhubwagen
- 5: Grundgestell
- 6: Tragplatte
- 7: Stützstrebe
- 8: Stützstrebe
- 9: Rollenanordnung
- 10: Stützen
- 11: Vorsprung
- 12: Außengewinde
- 13: Bohrung
- 14: Führungsprofil
- 15: Schlitten
- 16: Führungsvorsprung
- 17: Führungsnut
- 18: Schrittmotor
- 19: Gewindespindel
- 20: Werkzeugwelle
- 21: vorderes freies Ende
- 22: Honwerkzeug
- 23: Kardangelenk
- 24: Schneide
- 25: vorderer Abschnitt
- 26: hinterer Abschnitt
- 27: Elektromotor
- 28: Gehäuse
- 29: flexible Kupplung
- 30: antriebsseitiger Bereich
- 31: abtriebsseitiger Bereich
- 32: Metallbalg
- 33: Einstellteller
- X: Werkzeugachse
- L: Längsachse

## Patentansprüche

1. Mobile Vorrichtung (1) zur in- situ- Bearbeitung von Bohrungsoberflächen an Bauteilen, insbesondere bei Bohrungen an Korresponenten eines Zugs, bevorzugt an Zugachsen,
einer Werkzeugeinheit (2), welche eine längliche Werkzeugwelle (20) aufweist, die um eine Werkzeugachse (X) rotierend antreibbar ist und an einem vorderen freien Ende (21) mit Aufnahmemitteln für ein Werkzeug versehen ist, und
einer auf einem Boden verfahrbaren Trägereinheit (3), an welcher die Werkzeugeinheit (2) parallel zur Werkzeugachse (X) linear verfahrbar angebracht ist, um die Werkzeugeinheit (2) auf das zu bearbeitende Bauteil zu oder von diesem weg zu bewegen und ein an dem freien Ende (21) der Werkzeugwelle (20) angebrachtes Werkzeug in eine zu bearbeitende Bohrung einzubringen,
wobei die Trägereinheit (3) Einstellmittel aufweist, um die Werkzeugachse (X) koaxial zur Bohrungsachse einer zu bearbeitenden Bohrung auszurichten.

2. Vorrichtung (1) nach Anspruch 1, **dadurch gekennzeichnet, dass** die Trägereinheit (3) einen mobilen, verfahrbaren Hubwagen aufweist, welcher ein bodennahes Grundgestell (5) mit einer insbesondere rechteckigen Grundform und eine relativ zu diesem höhenverstellbare Tragplatte (6), welche die Werkzeugeinheit (2) trägt, umfasst,
wobei der Hubwagen insbesondere als Scherenhubwagen (4) ausgebildet ist.

3. Vorrichtung (1) nach einem der vorherigen Ansprüche, **dadurch gekennzeichnet, dass** die Einstellmittel an der Trägereinheit (3) vorgesehene Verfahrmittel umfassen, um die Trägereinheit (3) auf einem Boden insbesondere manuell zu bewegen und relativ zum zu bearbeitenden Bauteil zu positionieren.

4. Vorrichtung (1) nach Anspruch 3, **dadurch gekennzeichnet, dass** die Verfahrmittel 4 in den Eckbereichen der Trägereinrichtung angeordnete Rollenanordnungen (9) umfassen, wobei insbesondere die Rollenanordnungen (9) schwenkbar an der Trägereinheit (3) um eine senkrecht zum Boden verlaufende Drehachse gelagert sind.

5. Vorrichtung (1) nach einem der vorherigen Ansprüche, **dadurch gekennzeichnet, dass** Stützmittel vorgesehen sind, um die Trägereinheit (3) am Boden abzustützen und ein unbeabsichtigtes Bewegen während der Bearbeitung eines Bauteils zu vermeiden.

6. Vorrichtung (1) nach Anspruch 5, **dadurch gekennzeichnet, dass** die Stützmittel insgesamt vier Stützen (10) umfassen, welche an der Trägereinheit (3) höhenverstellbar zu dieser derart angebracht sind, dass diese die Trägereinheit (3) während der Bearbeitung eines Bauteils gegen den Boden abstützen und so gegen ein unbeabsichtigtes Bewegen sichern können, wobei insbesondere die Stützen (10) derart an der Trägereinheit (3) angebracht sind, dass sie die Ecken eines Trapezes, insbesondere eines gleichschenkligen Trapezes und bevorzugt eines Rechtecks bilden.

7. Vorrichtung (1) nach Anspruch 6, **dadurch gekennzeichnet, dass** die Stützen (10) unabhängig voneinander zur Trägereinheit (3) höhenverstellbar sind, so dass durch Einstellen der Stützen (10) die Werkzeugwelle (20) mit ihrem vorderen freien Ende (21) nach unten und oben gekippt werden kann, um die Werkzeugachse (X) koaxial zur Bohrungsachse einer zu bearbeitenden Bohrung auszurichten, wobei insbesondere jede Stütze (10) mit einem Außengewinde (12) versehen ist, welches in eine Bohrung (13) mit einem korrespondierenden Innengewinde der Trägereinheit (3) eingeschraubt ist, so dass die Stützen (10) um ihre Längsachse gedreht werden können, um eine Höhenverstellung vorzunehmen.

8. Vorrichtung (1) nach einem der vorherigen Ansprüche, **dadurch gekennzeichnet, dass** eine Linearführung vorgesehen ist, um die Werkzeugeinheit (2) relativ zur Trägereinheit (3) parallel zur Werkzeugachse (X) zu führen.

9. Vorrichtung (1) nach Anspruch 8, **dadurch gekennzeichnet, dass** die Linearführung ein Führungsprofil (14), welches auf der Trägereinheit (3), insbesondere auf einer Tragplatte (6) der Trägereinheit (3), aufliegt und an dieser befestigt ist, und einen die Werkzeugeinheit (2) tragenden Schlitten (15) umfasst, welcher am Führungsprofil (14) gehalten ist und relativ zu diesem verfahrbar ist.

10. Vorrichtung (1) nach Anspruch 9, **dadurch gekennzeichnet, dass** Vorschubmittel vorgesehen sind, um den Schlitten (15) relativ zum Führungsprofil (14) zu bewegen.

11. Vorrichtung (1) nach Anspruch 10, **dadurch gekennzeichnet, dass** die Vorschubmittel einen Antriebsmotor, insbesondere einen Schrittmotor (18) umfassen, wobei die Vorschubmittel insbesondere ferner eine drehfest mit dem Antriebsmotor gekoppelte Gewindespindel (19) und eine korrespondierende, am Schlitten (15) befestigte Spindelmutter umfassen, um eine Drehbewegung der Gewindespindel (19) in eine translatorische Bewegung des Schlittens (15) umzusetzen.

12. Vorrichtung (1) nach einem der vorherigen Ansprüche, **dadurch gekennzeichnet, dass** die Werkzeugeinheit (2) Antriebsmittel aufweist, um die Werkzeugwelle (20) in Rotation zu versetzen, wobei insbesondere die Antriebsmittel einen Elektromotor (27), insbesondere einen drehzahlgesteuerten Elektromotor (27), bevorzugt einen Schrittmotor oder einen Servomotor, umfassen, wobei die Werkzeugeinheit (2) bevorzugt ein Gehäuse (28) umfasst, welches den Elektromotor (27) zumindest teilweise umgibt, um den Elektromotor (27) vor Verunreinigungen zu schützen.

13. Vorrichtung (1) nach einem der vorherigen Ansprüche, **dadurch gekennzeichnet, dass** am freien Ende (21) der Werkzeugwelle (20) ein Honwerkzeug (22) zur Innenbearbeitung von Bohrungen angebracht ist und/oder dass die Werkzeugwelle (20) mehrteilig ausgebildet ist und einen werkzeugseitigen vorderen Abschnitt (25) und einen antriebsseitigen hinteren Abschnitt (26) umfasst, wobei die beiden Abschnitte (25, 26) durch eine flexible Kupplung (29) miteinander verbunden sind, um Abweichungen der Koaxialität der Werkzeugachse (X) zur Bohrungsachse ausgleichen zu können und/oder diese ferner eine Lasermesseinrichtung umfasst, welche ausgebildet und geeignet ist, die Ausrichtung der Werkzeugachse (X) relativ zu der Bohrungsachse einer zu bearbeitenden Bohrung zu vermessen.

14. Verfahren zur in- situ- Bearbeitung von Bohrungsoberflächen an Bauteilen, insbesondere bei Bohrungen von Korresponenten eines Zugs, bevorzugt von Zugachsen, umfassend die folgenden Schritte:
- Bereitstellen des zu bearbeitenden Bauteils, insbesondere eines Zugs, bevorzugt mit mehreren Zugachsen;
- Bereitstellen einer mobilen Vorrichtung (1) nach einem der vorherigen Ansprüche;
- Einstellen der Vorrichtung (1) derart, dass die Werkzeugachse (X) koaxial zur Bohrungsachse der zu bearbeitenden Bohrung ausgerichtet ist.
- Bearbeiten, insbesondere Honen der Bohrungsoberfläche, durch Einbringen des freien Endes der Werkzeugwelle (20), welches mit einem entsprechenden Werkzeug, insbesondere einem Honwerkzeug (22), versehen ist, in die zu bearbeitende Bohrung.

15. Verfahren nach Anspruch 14, **dadurch gekennzeichnet, dass** das Einstellen der Vorrichtung (1) ein insbesondere manuelles Bewegen der Vorrichtung (1) auf einem Boden umfasst, um die Werkzeugeinheit (2) vor dem zu bearbeitenden Bauteil zu positionieren und/oder dass das Einstellen der Vorrichtung (1) eine Höheneinstellung der Werkzeugeinheit (2) relativ zum Boden umfasst, um die Werkzeugeinheit (2) derart auszurichten, dass die Werkzeugachse (X) auf der Höhe der Bohrungsachse der zu bearbeitenden Bohrung verläuft und/oder dass das Einstellen der Vorrichtung (1) eine Neigungseinstellung der Werkzeugachse (X) relativ zur Bohrungsachse durch Verkippen des vorderen freien Endes (21) der Werkzeugwelle (20) nach oben oder nach unten umfasst, um die Werkzeugachse (X) koaxial zur Bohrungsachse der zu bearbeitenden Bohrung auszurichten und/oder dass während des Einstellens der Vorrichtung (1) ein Vermessen der Ausrichtung der Werkzeugachse (X) relativ zu der Bohrungsachse der zu bearbeitenden Bohrung insbesondere mittels einer Lasermesseinrichtung stattfindet.

## Geänderte Patentansprüche

### Geänderte Patentansprüche gemäss Regel 137(2) EPÜ.

1. Mobile Vorrichtung (1) zur in- situ- Bearbeitung von Bohrungsoberflächen an Bauteilen, insbesondere bei Bohrungen an Komponenten eines Zugs, bevorzugt an Zugachsen, mit
einer Werkzeugeinheit (2), welche eine längliche Werkzeugwelle (20) aufweist, die um eine Werkzeugachse (X) rotierend antreibbar ist und an einem vorderen freien Ende (21) mit Aufnahmemitteln für ein Werkzeug versehen ist, und
einer auf einem Boden verfahrbaren Trägereinheit (3), an welcher die Werkzeugeinheit (2) parallel zur Werkzeugachse (X) linear verfahrbar angebracht ist, um die Werkzeugeinheit (2) auf das zu bearbeitende Bauteil zu oder von diesem weg zu bewegen und ein an dem freien Ende (21) der Werkzeugwelle (20) angebrachtes Werkzeug in eine zu bearbeitende Bohrung einzubringen,
wobei die Trägereinheit (3) Einstellmittel aufweist, um die Werkzeugachse (X) koaxial zur Bohrungsachse einer zu bearbeitenden Bohrung auszurichten, wobeidie Trägereinheit (3) einen mobilen, verfahrbaren Hubwagen aufweist, welcher ein bodennahes Grundgestell (5) mit einer insbesondere rechteckigen Grundform und eine relativ zu diesem höhenverstellbare Tragplatte (6), welche die Werkzeugeinheit (2) trägt, umfasst, **dadurch gekennzeichnet, dass** der Hubwagen als Scherenhubwagen (4) ausgebildet ist.

2. Vorrichtung (1) nach einem der vorherigen Ansprüche, **dadurch gekennzeichnet, dass** die Einstellmittel an der Trägereinheit (3) vorgesehene Verfahrmittel umfassen, um die Trägereinheit (3) auf einem Boden insbesondere manuell zu bewegen und relativ zum zu bearbeitenden Bauteil zu positionieren.

3. Vorrichtung (1) nach Anspruch 2, **dadurch gekennzeichnet, dass** die Verfahrmittel vier in den Eckbereichen der Trägereinrichtung angeordnete Rollenanordnungen (9) umfassen, wobei insbesondere die Rollenanordnungen (9) schwenkbar an der Trägereinheit (3) um eine senkrecht zum Boden verlaufende Drehachse gelagert sind.

4. Vorrichtung (1) nach einem der vorherigen Ansprüche, **dadurch gekennzeichnet, dass** Stützmittel vorgesehen sind, um die Trägereinheit (3) am Boden abzustützen und ein unbeabsichtigtes Bewegen während der Bearbeitung eines Bauteils zu vermeiden.

5. Vorrichtung (1) nach Anspruch 4, **dadurch gekennzeichnet, dass** die Stützmittel insgesamt vier Stützen (10) umfassen, welche an der Trägereinheit (3) höhenverstellbar zu dieser derart angebracht sind, dass diese die Trägereinheit (3) während der Bearbeitung eines Bauteils gegen den Boden abstützen und so gegen ein unbeabsichtigtes Bewegen sichern können, wobei insbesondere die Stützen (10) derart an der Trägereinheit (3) angebracht sind, dass sie die Ecken eines Trapezes, insbesondere eines gleichschenkligen Trapezes und bevorzugt eines Rechtecks bilden.

6. Vorrichtung (1) nach Anspruch 5, **dadurch gekennzeichnet, dass** die Stützen (10) unabhängig voneinander zur Trägereinheit (3) höhenverstellbar sind, so dass durch Einstellen der Stützen (10) die Werkzeugwelle (20) mit ihrem vorderen freien Ende (21) nach unten und oben gekippt werden kann, um die Werkzeugachse (X) koaxial zur Bohrungsachse einer zu bearbeitenden Bohrung auszurichten, wobei insbesondere jede Stütze (10) mit einem Außengewinde (12) versehen ist, welches in eine Bohrung (13) mit einem korrespondierenden Innengewinde der Trägereinheit (3) eingeschraubt ist, so dass die Stützen (10) um ihre Längsachse gedreht werden können, um eine Höhenverstellung vorzunehmen.

7. Vorrichtung (1) nach einem der vorherigen Ansprüche, **dadurch gekennzeichnet, dass** eine Linearführung vorgesehen ist, um die Werkzeugeinheit (2) relativ zur Trägereinheit (3) parallel zur Werkzeugachse (X) zu führen.

8. Vorrichtung (1) nach Anspruch 7, **dadurch gekennzeichnet, dass** die Linearführung ein Führungsprofil (14), welches auf der Trägereinheit (3), insbesondere auf einer Tragplatte (6) der Trägereinheit (3), aufliegt und an dieser befestigt ist, und einen die Werkzeugeinheit (2) tragenden Schlitten (15) umfasst, welcher am Führungsprofil (14) gehalten ist und relativ zu diesem verfahrbar ist.

9. Vorrichtung (1) nach Anspruch 8, **dadurch gekennzeichnet, dass** Vorschubmittel vorgesehen sind, um den Schlitten (15) relativ zum Führungsprofil (14) zu bewegen.

10. Vorrichtung (1) nach Anspruch 9, **dadurch gekennzeichnet, dass** die Vorschubmittel einen Antriebsmotor, insbesondere einen Schrittmotor (18) umfassen, wobei die Vorschubmittel insbesondere ferner eine drehfest mit dem Antriebsmotor gekoppelte Gewindespindel (19) und eine korrespondierende, am Schlitten (15) befestigte Spindelmutter umfassen, um eine Drehbewegung der Gewindespindel (19) in eine translatorische Bewegung des Schlittens (15) umzusetzen.

11. Vorrichtung (1) nach einem der vorherigen Ansprüche, **dadurch gekennzeichnet, dass** die Werkzeugeinheit (2) Antriebsmittel aufweist, um die Werkzeugwelle (20) in Rotation zu versetzen, wobei insbesondere die Antriebsmittel einen Elektromotor (27), insbesondere einen drehzahlgesteuerten Elektromotor (27), bevorzugt einen Schrittmotor oder einen Servomotor, umfassen, wobei die Werkzeugeinheit (2) bevorzugt ein Gehäuse (28) umfasst, welches den Elektromotor (27) zumindest teilweise umgibt, um den Elektromotor (27) vor Verunreinigungen zu schützen.

12. Vorrichtung (1) nach einem der vorherigen Ansprüche, **dadurch gekennzeichnet, dass** am freien Ende (21) der Werkzeugwelle (20) ein Honwerkzeug (22) zur Innenbearbeitung von Bohrungen angebracht ist und/oder dass die Werkzeugwelle (20) mehrteilig ausgebildet ist und einen werkzeugseitigen vorderen Abschnitt (25) und einen antriebsseitigen hinteren Abschnitt (26) umfasst, wobei die beiden Abschnitte (25, 26) durch eine flexible Kupplung (29) miteinander verbunden sind, um Abweichungen der Koaxialität der Werkzeugachse (X) zur Bohrungsachse ausgleichen zu können und/oder diese ferner eine Lasermesseinrichtung umfasst, welche ausgebildet und geeignet ist, die Ausrichtung der Werkzeugachse (X) relativ zu der Bohrungsachse einer zu bearbeitenden Bohrung zu vermessen.

13. Verfahren zur in- situ- Bearbeitung von Bohrungsoberflächen an Bauteilen, insbesondere bei Bohrungen von Korresponenten eines Zugs, bevorzugt von Zugachsen, umfassend die folgenden Schritte:
- Bereitstellen des zu bearbeitenden Bauteils, insbesondere eines Zugs, bevorzugt mit mehreren Zugachsen;
- Bereitstellen einer mobilen Vorrichtung (1) nach einem der vorherigen Ansprüche;
- Einstellen der Vorrichtung (1) derart, dass die Werkzeugachse (X) koaxial zur Bohrungsachse der zu bearbeitenden Bohrung ausgerichtet ist.
- Bearbeiten, insbesondere Honen der Bohrungsoberfläche, durch Einbringen des freien Endes der Werkzeugwelle (20), welches mit einem entsprechenden Werkzeug, insbesondere einem Honwerkzeug (22), versehen ist, in die zu bearbeitende Bohrung.

14. Verfahren nach Anspruch 13, **dadurch gekennzeichnet, dass** das Einstellen der Vorrichtung (1) ein insbesondere manuelles Bewegen der Vorrichtung (1) auf einem Boden umfasst, um die Werkzeugeinheit (2) vor dem zu bearbeitenden Bauteil zu positionieren und/oder dass das Einstellen der Vorrichtung (1) eine Höheneinstellung der Werkzeugeinheit (2) relativ zum Boden umfasst, um die Werkzeugeinheit (2) derart auszurichten, dass die Werkzeugachse (X) auf der Höhe der Bohrungsachse der zu bearbeitenden Bohrung verläuft und/oder dass das Einstellen der Vorrichtung (1) eine Neigungseinstellung der Werkzeugachse (X) relativ zur Bohrungsachse durch Verkippen des vorderen freien Endes (21) der Werkzeugwelle (20) nach oben oder nach unten umfasst, um die Werkzeugachse (X) koaxial zur Bohrungsachse der zu bearbeitenden Bohrung auszurichten und/oder dass während des Einstellens der Vorrichtung (1) ein Vermessen der Ausrichtung der Werkzeugachse (X) relativ zu der Bohrungsachse der zu bearbeitenden Bohrung insbesondere mittels einer Lasermesseinrichtung stattfindet.
